# EUROPÄISCHE PATENTANMELDUNG

(11) **EP 1 158 377 A2**
(43) Veröffentlichungstag der Anmeldung: **28.11.2001**
(21) Anmeldenummer: 01110947.7
(22) Anmeldetag: 05.05.2001
(51) Int. Cl.: G05B 19/042, G08C 17/00

(54) **Fernsteueranlage, insbesondere zur Fernsteuerung von Industriegeräten**

(30) Priorität: 20.05.2000 DE 10025131
(71) Anmelder: Integrated Electronic Systems !SYS Consulting GmbH, 75248 Ölbronn-Dürrn (DE)
(72) Erfinder: Bredow, Wolfgang, 75217 Birkenfeld (DE); Burchard, Thomas, 75180 Pforzheim (DE); Haug, Thomas, 75249 Kieselbronn (DE)
(74) Vertreter: Frank, Gerhard, Dipl.-Phys.

(57) **Zusammenfassung**

Eine Fernsteueranlage insbesondere zur Fernsteuerung von Industriegeräten besitzt einen Sensor, der sicherheitsrelevante medizinische Daten der Bedienperson ermittelt und als Kontrollsignal an eine Kontrollschaltung im Sender oder Empfänger weitergibt. Die Kontrollschaltung veranlasst einen vorgebbaren Steuerablauf, wenn der Wert des Kontrollsignals mindestens einen vorgebbaren Wert über- oder unterschreitet.

Dadurch kann insbesondere eine Funktionsstörung des "Bestandteils Mensch" im Gesamtsystem zuverlässig erfasst werden, sobald sie sicherheitsrelevant wird, d.h., sobald die Gefahr besteht, dass die Bedienperson zu einer ordnungsgemäßen und verantwortungsbewussten Steuerung des Industriegerätes mittels der Fernsteueranlage nicht mehr in der Lage sein könnte.

## Beschreibung

Fernsteueranlagen der gattungsgemäßen Art bestehen in der Regel aus einem Sendeteil, das von einer Bedienperson gehandhabt wird und einem Empfangsteil an dem zu steuernden Industriegerät (z.B. einem Kran), dem die Steuersignale des Steuerteils drahtgebunden oder drahtlos (insbesondere per Funk) übermittelt werden. Das Empfangsteil setzt die empfangenen Steuersignale dann in die gewünschten Bewegungen des gesteuerten Industriegeräts um.

Bei den gesteuerten Industriegeräten handelt es sich zum großen Teil um Geräte, die sehr sicherheitsorientiert gesteuert werden müssen, da sie beispielsweise aufgrund ihrer Größe oder der von ihnen zu bewegenden Gegenstände bei einer Fehlsteuerung einen erheblichen Schaden verursachen können. Es ist daher bekannt, bei derartigen Fernsteueranlagen einen "Not-Aus-Schalter" vorzusehen, der es der Bedienperson erlaubt, bei einer einmal erkannten Fehlerfunktion die gesteuerte Bewegung des Industriegerätes schnell zu beenden oder dieses zumindest in einen Wartezustand zu versetzen, bis die Ursache der Fehlsteuerung bzw. Fehlbewegung ermittelt ist.

Diese Handhabung ist zuverlässig, setzt aber voraus, dass die Bedienperson in der Lage ist, schnell genug eine bedrohliche Situation zu erkennen und den Not-Aus-Schalter am Sendegerät zu betätigen. Dieses Verfahren nach dem Stand der Technik hat somit zwei wesentliche Nachteile:

Fehler bei der Bedienperson im System "Mensch-Maschine" werden nicht erfasst, d.h., plötzliche gesundheitliche Reaktionen der Bedienperson, sei es mit oder ohne Einwirkung des erkannten fehlerhaften Arbeitens des gesteuerten Industriegerätes, können unter Umständen eine zeitnahe Aktivierung des Not-Aus-Schalters verhindern und somit kann ein drohender Schaden nicht rechtzeitig oder zuverlässig abgewendet werden. Außerdem ist das bekannte System darauf angewiesen, dass der Not-Aus-Schalter ein leicht erreichbarer Teil am Bedienungsgerät ist, also im wesentlichen, dass das Bedienungsgerät in den Händen der Bedienperson gehalten wird.

Insbesondere bei der Funkfernsteuerung von Industriegeräten ist es nun aber auch denkbar, auf ein solches Hand-Bediengerät zu verzichten und die Steuerung sprachgesteuert vorzunehmen, wozu der Sender nicht notwendigerweise in einem Bedien-Handgerät untergebracht sein muss, bzw. auf dieses vollständig verzichtet werden kann.

Es ist daher Aufgabe der Erfindung, eine Femsteueranlage so weiterzubilden, dass wesentliche, insbesondere sicherheitsrelevante Steuerinformationen auch dann zur Verfügung stehen, wenn die Betätigung eines Not-Aus-Schalters in seiner klassischen Ausbildung nicht erfolgen kann.

Erfindungsgemäß wird diese Aufgabe gemäß dem kennzeichnenden Teil des Patentanspruchs 1 gelöst.

Der Grundgedanke der Erfindung ist daher darin zu sehen, dass auch eine Funktionsstörung des "Bestandteils Mensch" im Gesamtsystem zuverlässig erfasst wird, sobald sie sicherheitsrelevant wird, d.h., sobald die Gefahr besteht, dass die Bedienperson zu einer ordnungsgemäßen und verantwortungsbewussten Steuerung des Industriegerätes mittels der Fernsteueranlage nicht mehr in der Lage sein könnte.

Dieses Grundprinzip kann auch bei klassischen Bedienhandgeräten eingesetzt werden, ermöglicht jedoch auch in Verbindung beispielsweise mit Kopfhörer-Sets zur sprachgesteuerten Steuerung des betreffenden Industriegeräts die zuverlässige Not-Aus-Funktion. Hierbei kann je nach Wahl der Gestaltung des Sender-Bedienteils ein zur Erfassung des Gesundheitszustandes eingesetzter Sensor entweder unmittelbar in einem gemeinsamen Gehäuse mit den sonstigen elektronischen Sendebauteilen eingebaut sein, oder aber auch separat an denjenigen Stellen angeordnet sein, wo eine besonders zuverlässige Gewinnung einer medizinischen Information über den Gesundheitszustand der Bedienperson möglich ist, insbesondere eine medizinische Information, die ein Maßstab für eine aktuelle Stress-Situation der Bedienperson darstellt. Der Sensor kann somit in einem vom Sendeteil räumlich getrennten Bauteil untergebracht sein, beispielsweise in einer am Handgelenk befestigten Manschette, die die Pulsfrequenz der Bedienperson kontinuierlich oder in vorgebbaren Abschnitten misst.

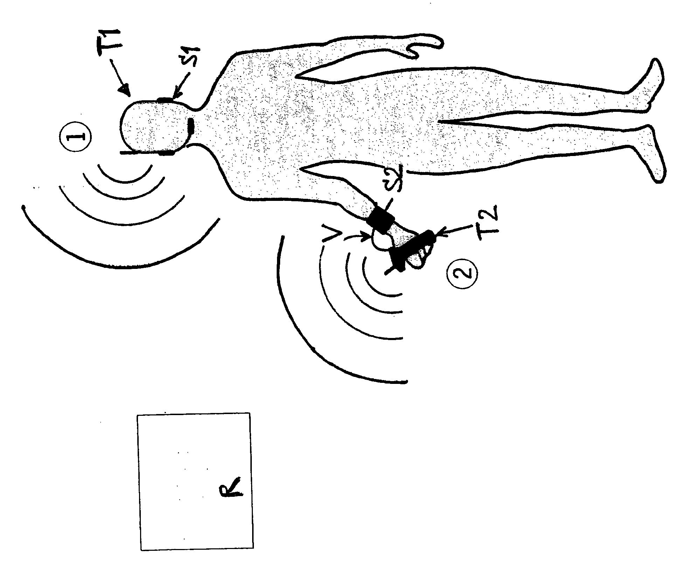

In der Zeichnung sind zwei typische Realisierungen dargestellt, die im folgenden noch kurz erläutert werden sollen:

Die Variante 1 zeigt ein Sendegerät in Form eines Kopfhörer-Sets T1, das in bekannter Weise über eine Sprechmuschel zur Eingabe der Sprachsteuerungsbefehle verfügt und in dem zusammen mit den üblichen elektronischen Bestandteilen eine Kontrollschaltung und eine Antenne vorgesehen ist, mit der die geeignet umgesetzten Sprachbefehle an einen Empfänger R übermittelt werden. Bei der zweiten Alternative 2 ist als Femsteuersender ein Bedienungshandgerät T2 vorgesehen, in dem in üblicher Art und Weise die elektronischen Bestandteile zusammen mit der erfindungsgemäßen Kontrollschaltung untergebracht sind.

In beiden Ausführungsbeispielen dient die Kontrollschaltung zur Verarbeitung eines von einem Sensor gelieferten gesundheitsrelevanten Kontrollsignals. Hierzu ist beim dargestellten ersten Ausführungsbeispiel der Sensor S1 im Kopfbereich des Kopfhörersets T1 untergebracht, der Sensor S2 beim zweiten Ausführungsbeispiel ist als Handmanschette ausgeführt und über eine Verbindungsleitung V mit dem Bedienungshandgerät T2 bzw. der darin enthaltenen Kontrollschaltung verbunden.

Es versteht sich von selbst, dass die Zuordnung von Sensor S und Sendegerät T auch austauschbar ist oder anders gelöst werden kann, beispielsweise durch einen in der Grifffläche des Bedienungshandgerätes T2 angeordneten Sensor oder auch durch eine Verbindungsleitung von einer Handmanschette mit dem Sensor zu einem Kopfhörerset bei sprachgesteuerter Fernsteuerung.

Allgemein ist somit festzuhalten, dass die Informationsübermittlung vom Sensor zur Kontrollschaltung durch mehrere Optionen realisiert werden kann: Entweder durch eine räumliche Zusammenfassung und Integration des Sensors in das jeweilige Sendegerät, wenn dort die Erfassung eines gesundheitlich relevanten medizinischen Parameters möglich ist, oder durch die Übermittlung des Kontrollsignals vom an einer medizinisch geeigneten Stelle angeordneten Sensor, entweder mit einer Verbindungsleitung oder mit einer separaten drahtlosen Verbindung zum jeweils gewählten Bedienungsgerät.

Die erfindungsgemäße Lösung ermöglicht somit eine automatische Überwachung der Bedienperson in gesundheitlicher Hinsicht mittels einer Information, die insbesondere solche medizinischen Parameter umfasst, die typisch für Stresssituationen der Bedienperson sind. Anders ausgedrückt, die jeweilige Steuerfunktion des Steuergerätes für das Industriegerät bleibt nur so lange erhalten, wie die vom Sensor an der jeweiligen Bedienperson gemeldeten, erfassten und an die Kontrollschaltung übertragenen medizinischen Daten innerhalb einer Toleranzbandbreite bleiben oder unterhalb einer Toleranzschwelle, gegebenenfalls auch miteinander kombiniert. Diese Toleranzbandbreiten/Schwellen können in einer Weiterbildung der erfindungsgemäßen Lösung auch "gelernt" werden, so dass sich die Fernsteueranlage auf ein individuelles "Stressprofil" der jeweiligen Bedienperson einstellen kann. Bei Verlassen des Toleranzbereichs, was in der Regel in einer für die Bedienperson außergewöhnlichen Situation erfolgt, wird der vorgebbare Steuerablauf des Steuersenders eingeleitet, hierbei kann eine klassische Not-Aus-Funktion veranlasst werden, es können aber auch andere Funktionsabläufe wie Stand by, Alarmgabe oder ähnliches einzeln oder auch zusammen veranlasst werden.

## Patentansprüche

1. Fernsteueranlage insbesondere zur Fernsteuerung von Industriegeräten, **dadurch gekennzeichnet dass** ein Sensor sicherheitsrelevante medizinische Daten der Bedienperson ermittelt und als Kontrollsignal an eine Kontrollschaltung im Sender oder Empfänger weitergibt, die einen vorgebbaren Steuerablauf veranlasst, wenn der Wert des Kontrollsignals mindestens einen vorgebbaren Wert über- oder unterschreitet.

2. Fernsteueranlage nach Anspruch 1, **dadurch gekennzeichnet, dass** der Sensor und die Kontrollschaltung Teil eines Senders sind, der in körperlichem Kontakt mit der Bedienperson steht.

3. Fernsteueranlage nach Anspruch 2, **dadurch gekennzeichnet, dass** der Sender Teil eines Bedienungshandgeräts (T2) ist.

4. Femsteueranlage nach Anspruch 2, **dadurch gekennzeichnet, dass** der Sender Teil eines Kopfhörersets (T1) zur Sprachsteuerung ist.

5. Fernsteueranlage nach Anspruch 1, **dadurch gekennzeichnet, dass** der Sensor Teil einer vom Sender getrennten Baueinheit (S) ist, die in körperlichem Kontakt mit der Bedienperson steht, und dass die medizinischen Daten und/oder das Kontrollsignal über eine Verbindungsleitung (V) an den Sender oder drahtlos an den Sender oder den Empfänger (R) übermittelt wird.

6. Fernsteueranlage nach Anspruch 1, **dadurch gekennzeichnet, dass** der Sensor die Pulsfrequenz misst und hieraus das Kontrollsignal ableitet.

7. Femsteueranlage nach Anspruch 1, **dadurch gekennzeichnet, dass** der Sensor die Leitfähigkeit eines Hautabschnitts der Bedienperson misst und hieraus das Kontrollsignal ableitet.

8. Fernsteueranlage nach Anspruch 1, **dadurch gekennzeichnet, dass** der Sensor den Blutdruck der Bedienperson misst und hieraus das Kontrollsignal ableitet.

9. Fernsteueranlage nach Anspruch 1, **dadurch gekennzeichnet, dass** der vorgebbare Steuerablauf aus einer Aktivierung oder Deaktivierung bestimmter Funktionen des Senders oder des Empfängers besteht.

10. Fernsteueranlage nach Anspruch 1, **dadurch gekennzeichnet, dass** die Kontrollschaltung von einem Bedienelement unabhängig vom Sensor zur Veranlassung des vorgebbaren Steuerablaufs betätigbar ist.

11. Fernsteueranlage nach Anspruch 5, **dadurch gekennzeichnet, dass** die Übertragung per Infrarot,Funk oder induktiv erfolgt.

12. Fernsteueranlage nach Anspruch 1, **dadurch gekennzeichnet, dass** sie eine Speichereinheit enthält, die die medizinischen Daten über vorgebbare Zeiträume abspeichert,sowie eine Recheneinheit, die aus den abgespeicherten medizinischen Daten Informationen gewinnt, die zur individuellen Anpassung oder Gestaltung des Kontrollsignals und/oder der vorgebbaren Werte zur Auslösung des vorgebbaren Steuerablaufs im Sinne einer Lernfähigkeit bezüglich der medizinischen Eigenheiten der jeweiligen Bedienperson benutzt werden.

13. Fernsteueranlage nach Anspruch 1, **dadurch gekennzeichnet, dass** der vorgebbare Steuerablauf als 'Not-Aus'-Signal eine Deaktivierung des Senders oder des Empfängers bewirkt.
